# EUROPEAN PATENT APPLICATION

(11) **EP 1 343 280 A1**
(43) Date of publication of application: **10.09.2003**
(21) Application number: 02251590.2
(22) Date of filing: 06.03.2002
(51) Int. Cl.: H04L 12/56

(54) **Proxying method and system for wireless networks**

(71) Applicant: Red-M (Communications) Limited, Wooburn Green, Buckinghamshire HP10 0HH (GB)
(72) Inventor: Harrison, Simon, High Wycombe, Buckinghamshire HP12 6EH (GB)
(74) Representative: Finnie, Peter John

(57) **Abstract**

The invention relates to wireless networks and preferably Bluetooth networks. The invention is able to offer a proxy printing service where an end point device (EP) such as a PC (2), a laptop or a PDA can utilise its existing baseband wireless connection to send the print job to a printer (3) via an access point (AP)(1). The AP (1) makes a second connection, this time to the printer (3), and proxies the printer's service directly to the EP (2). Thus the EP (2) thinks it is connected directly to a printer (3) but the bandwidth is efficiently used and the AP data connection remains active and usable.

## Description

### Field of the invention

The present invention relates to the wireless networks and in particular to Bluetooth networks.

### Background to the invention

Wireless types of networks are now becoming more wide spread. Wireless communication can be broken down into one of three main categories, radio, cellular and local. Radio communications are used for mainly long distance work, and cellular communications are used for mobile phones and the like. At present, the cellular system can also be used to provide limited Internet access using WAP (Wireless Application Protocol) phones. Internet access is also possible via a cellular phone, a GSM modem and a PC/PDA.

In addition to this, the local communication standards are also provided for short-range radio communication. These systems have been used within the production of wireless networks.

One such short-range radio communication radio system is Bluetooth which can be used to provide customer premises wireless links for voice, data and multimedia applications.

A Bluetooth Radio Frequency (RF) system is a Fast Frequency Hopping Spread Spectrum (FFHSS) system in which packets are transmitted in regular time slots on frequencies defined by a pseudo random sequence. A Frequency Hopping system provides Bluetooth with resilience against interference. Interference may come from a variety of sources including microwave ovens and other communication systems operating in this unlicensed radio band which can be used freely around the world. The system uses 1MHz frequency hopping steps to switch among 79 frequencies in the 2.4GHz Industrial, Scientific and Medical (ISM) band at 1600 hops per second with each channel using a different hopping sequence.

The Bluetooth baseband architecture includes a Radio Frequency transceiver (RF), a Link Controller (LC) and a Link Manager (LM) implementing the Link Manager Protocol (LMP).

Bluetooth version 1.1 supports asymmetric data rates of up to 721 Kbits per second and 57.6 Kbits per second and symmetric data rates of up to 432.5 Kbits per second. Data transfers may be over synchronous connections, Bluetooth supports up to three pairs of symmetric synchronous voice channels of 64Kbits per second each.

Bluetooth connections operate in something called a piconet in which several nodes accessing the same channel via a common hopping sequence are connected in a point to multi-point network. The central node of a piconet is called a master that has up to seven active slaves connected to it in a star topology. The bandwidth available within a single piconet is limited by the master, which schedules time to communicate with its various slaves. In addition to the active slaves, devices can be connected to the master in a low power state known as park mode, these parked slaves cannot be active on the channel but remain synchronised to the master and addressable. Having some devices connected in park mode allows more than seven slaves be attached to a master concurrently. The parked slaves access the channel by becoming active slaves, this is regulated by the master.

Multiple piconets with overlapping coverage may co-operate to form a scatternet in which some devices participate in more that one piconet on a time division multiplex basis. These and any other piconets are not time or frequency synchronised, each piconet maintains its own independent master clock and hopping sequence. However, forming a persistent scatternet is a very inefficient use of bandwidth which makes connection very slow. Also, very few (if any) commercially available Bluetooth devices support scatternets, and it is possible that many neverwill, owing to the technical complexity, current Specification problems and the very inefficient use of bandwidth.

The Bluetooth specification has therefore been designed for the primary purpose of allowing electronic devices to communicate with each other. Thus, the system is typically utilized in an environment in which one-to-one communication is achieved between two Bluetooth enabled devices.

In a network scenario in which devices need to make multiple connections problems can arise. When printing to current Bluetooth-enabled printers it is necessary for the End Point device (EP), such as a laptop, to make an outgoing connection directly to the printer, regardless of its other connection commitments.

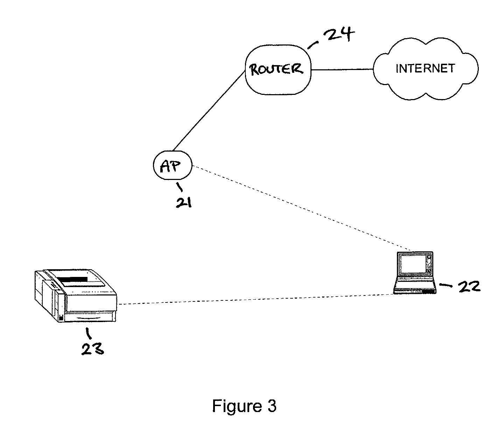

A practical example is shown in Figure 3, where a person using a laptop 22 to browse the internet via a router 24 and a Bluetooth Access Point (AP) 21 wants to print an on-line document. It is necessary for his laptop 22 (which is a slave to the AP) to either form a scatternet with the Printer 23 (laptop is slave to the AP and master to the printer) or to first disconnect from the AP 21, connect to the printer 23, print and disconnect, then reconnect to the AP 21.

As stated above, forming a persistent scatternet is a very inefficient use of bandwidth and the print job will take far longer to complete than if the laptop was directly connected to the printer.

Disconnecting and reconnecting poses other problems: the printed document might require on-line access during the printing process, it is an unnecessary complication for the user and it is time-consuming.

Additionally, the EP must be in range of both the printer and the AP, which may not be a problem if both belong to a single person but may be an issue in an office environment where the number of APs is greater than the number of printers.

### Summary of the invention

According to a first aspect of the present invention a method of proxying a service in a wireless network including an access point, a first end point device and a second end point device which offers a service, both the first and second end point devices capable of wireless connection with the access point, the access point allowing the end points to access other services, is characterised by the steps of:
establishing and maintaining a wireless connection between the second end point device and the access point;
advertising the service at the access point; and
establishing and maintaining a wireless connection between the first end point device and the access point, wherein the first end point device can use the same wireless baseband connection to access both the service offered by the second end point device and other services offered directly by the access point.

Preferably, the second end point device is a printer offering a print service. The service may be advertised in the form of a Serial Port Profile.

The first end point device may be a personal computer, a laptop, a mobile telephone or a personal digital assistant (PDA).

A plurality of end point devices may be able connect to the access point simultaneously in order to access the service offered by the second end point device. If each of the plurality of endpoint devices submits a service request to the access point simultaneously a queue of service requests may form in the access point.

The service offered by the second end point may also be advertised at a remote access point, the remote access point connected to the access point over a wired network. The service advertised at the access point may also be accessible to devices coupled directly to the access point via wired connections.

Preferably, the second end point device is put in a low power mode when the service that it offers is not being accessed.

Preferably, the wireless connections are Bluetooth connections. In this case the low power mode may be a Park or Sniff mode.

Preferably, the access point allows access to the service offered by the second end point device in dependence on predetermined criteria. This allows the implementation of quotas for each end point device, security measures blocking certain users and priority users or end point devices to be recognised.

According to second aspect of the present invention there is provided a wireless network adapted to operate in accordance with the first aspect of the present invention.

The present invention provides a proxying technique to allow end points to communicate with other Bluetooth devices through an Access Point, thus making best use of the available Bluetooth bandwidth and without introducing the extra complexity of scatternets in the endpoint.

### Brief Description of the Drawings

Examples of the present invention will now be described in detail with reference to the accompanying drawings, in which:
Figure 1 is a schematic representation of a simple wireless network adapted for use according to the present invention;
Figure 2 is a schematic representation of a more complex wireless network adapted for use according to the present invention; and
Figure 3 shows a connection configuration of a set of wireless devices in a typical scenario of the prior art.

### Detailed Description

The scenarios discussed below with reference to the accompanying drawings relate to printing services, but the present invention is applicable to many services, including, but not restricted to those services implemented over a Bluetooth RFComm Other examples include further serial port based services and also IP based services supporting a Personal Area Networking Profile (PAN). However this description is restricted to Bluetooth over RFComm.

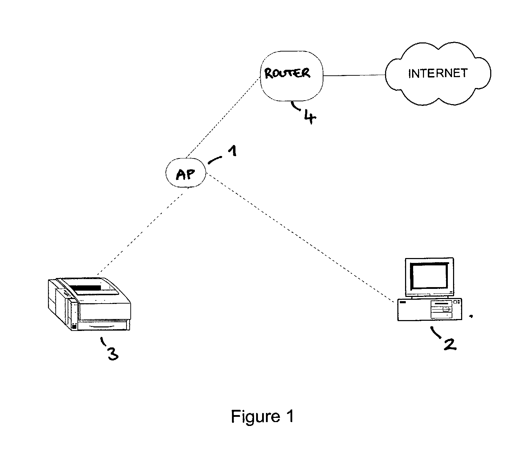

Referring to Figure 1, the network comprises a Bluetooth Access Point (AP) 1, a Bluetooth enabled Personal Computer 2 and a Bluetooth enabled printer 3. PC 2 is connected to AP 1 via a Bluetooth connection, represented by a dotted line. The AP 1 can be connected to a number of other network elements via either wired or wireless connection. As shown in Figure 1 the AP 1 is connected to a router 4 by a cable. The router 4 as shown is connected to the Internet and may be connected to other networks such as a Local Area Network (LAN) or a Public Switched Telephone Network (PSTN). In a preferred embodiment the router is a Red-M Access Server, available from Red-M Communications Limited, UK. The AP is preferably a Red-M Access Point, also available from Red-M Communications Limited, UK.

The operator of PC 2 can therefore access the Internet via a Bluetooth connection with AP 1. The operator may wish to print something from the Internet using printer 3. However, rather than connect directly with printer 3 the print request is made to AP 1, which is proxy to the printer (3).

In a set up phase AP 1 is told about the device(s) it will proxy, in this case printer 3. AP 1 initially makes an outgoing connection to the printer and performs a Service Discovery browse. The information it retrieves details the service name and connection channel, plus any other applicable details.

AP 1 then adds this information to its own Service Discovery database and begins advertising an identical service to PC 2 (perhaps with a "proxy" inserted into the name. The new server channel may also be different because it refers to an AP service, not the printer service). Setup is now complete.

When PC 2 wishes to print it is already connected to the AP in order to access the Internet so there is no requirement to set up an additional Bluetooth baseband connection (saving about I second of connection establishment time). However, if no connection exists, PC 2 will open a Bluetooth baseband connection to AP 1. PC 2 then performs a Service Discovery and finds the printing proxy in the form of a Serial Port Profile. It connects to this and sends the document to be printed. To PC 2 there is no difference between sending the document to AP 1 and the printer 3. AP 1 detects the incoming connection as a proxy print request and consequently creates an outgoing connection to the printer 3 on the printer's serial-port server channel. During the outgoing connection establishment AP 1 applies flow control to prevent PC 2 from sending the print job data. Once the outgoing connection to the printer is complete the two data pipes are joined inside AP 1 and the flow control to PC 2 is released. PC 2 then continues to send the document to be printed to the printer 3. From PC 2's perspective it appears to be talking directly to the printer 3. Once the document has completed printing, PC 2 will usually disconnect. AP 1 detects this disconnection, and waits until all data has been sent to the printer, then disconnects itself from the printer 3. AP 1 is then ready to proxy for another connection.

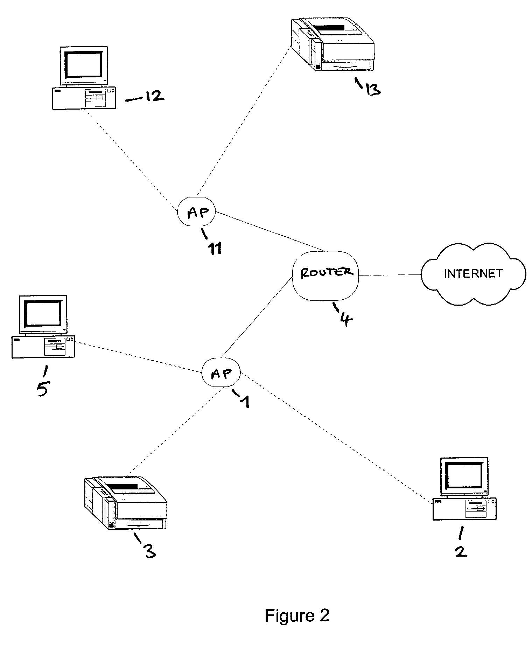

This system can be expanded in a number of ways, as shown in Figure 2. In Figure 2 two PCs, PC 2 and PC 5 are connected to AP 1. Queues can be formed inside AP 1 such that multiple PCs can connect and simultaneously submit print jobs. This allows pseudo-simultaneous use of the printer and prevents a "race" between two devices trying to print at the same time. If the devices were to connect directly to the printer, without the proxy, the slower user would receive a failure message. The print jobs are transferred serially to the printer 3, and may include the addition of a banner printout identifying the particular clients.

Also shown in Figure 2 is a second access point, AP 11, connected to the router 4. Separate incoming and outgoing serial connections can be made into different APs distributed across a network. Therefore a printer, PC and APs need not be co-located. The serial port would be transferred across the network using a serial-over-lP protocol. For example PC 5 as well as PC 12 could print to printer 13, the print job transferred across the network from AP 1 to AP 11 using a serial-over-IP protocol.

The connection entity inside an AP may make priority decisions when arbitrating between two different clients wanting to use the same printer.

The AP nearest a particular printer may "hog" the printer by connecting to it, opening the serial port link and then putting the connection into a low power mode. In this example the low power mode would be a Park or Sniff mode. This speeds up the proxy printing connection process considerably as the wireless link need not be reestablished, and also stops a single user blocking access to the printer by directly connecting (the AP would act as the hub for proxy connections, potentially over ethernet/IP as well as Bluetooth). The AP could further render the print service non-discoverable. The AP can then arbitrate between users wishing to access the service, queue the requests, detect a failed "hogging" connection and take appropriate action, provide usage statistics on the service, enforce quotas on the service etc. A "hogging" connection is a connection made by an end point to the AP preventing other users accessing the service. If the connection fails, for example because the end point crashes the AP can detect this and take appropriate action, for example disconnect the failed connection. The AP can also offer security benefits by enforcing access restrictions to the service. The restrictions could be based on one or more of an identification of the end point device requesting the service and stored data on each of the end point devices, data sent as part of the service request and the current usage of the service.

The present invention is able to offer a proxy printing service where an end point device (EP) such as a PC, a laptop or a PDA can utilise its existing Bluetooth baseband connection to send the print job to the printer via the AP. The AP makes a second connection, this time to the printer, and proxies the printer's service directly to the EP. Thus the EP thinks it is connected directly to a printer but the bandwidth is efficiently used and the AP data connection remains active and usable.

This scheme may be extended across APs so that the EP connects to the AP nearest to it, but a different AP connects to the printer, which could be some distance away. The print job data is transmitted over the wired LAN which links the two APs.

Although the present invention is primarily designed as a printing solution, it can be applied to any profile, in particular those running over RFCOMM such as the OBEX-related services.

The present invention solves the M/S/scatternet problem of access point/printing, and also the range problem of Bluetooth printers.

## Claims

1. A method of proxying a service in a wireless network including an access point (1), a first end point device (2) and a second end point device (3) which offers a service, both the first and second end point devices capable of wireless connection to the access point (1), the access point (1) allowing the end points to access other services, **characterised by** the steps of:
establishing and maintaining a wireless connection between the second end point device (3) and the access point (1);
advertising the service at the access point (1); and
establishing and maintaining a wireless connection between the first end point device (2) and the access point (1), wherein the first end point device (2) can use the same wireless baseband connection to access both the service offered by the second end point device (3) and other services offered directly by the access point (1).

2. A method of proxying a service in a wireless network according to claim 1 wherein the second end point device is a printer (3) offering a print service.

3. A method of proxying a service in a wireless network according to claim 2, wherein the service is advertised in the form of a Serial Port Profile.

4. A method of proxying a service in a wireless network according to any preceding claim, wherein the first end point device is a personal computer, a laptop, a mobile telephone or a personal digital assistant (PDA).

5. A method of proxying a service in a wireless network according to any preceding claim, wherein a plurality of end point devices (2,5) can connect to the access point (1) simultaneously in order to access the service offered by the second end point device (3).

6. A method of proxying a service in a wireless network according to claim 5, wherein each end point device submits a service request to the access point and a queue of service requests is formed in the access point (1).

7. A method of proxying a service in a wireless network according to any preceding claim, wherein the service offered by the second end point is advertised at a remote access point, the remote access point connected to the access point over a wired network.

8. A method of proxying a service in a wireless network according to any preceding claim, wherein the service advertised at the access point (1) is accessible to devices coupled to the access point via wired connections.

9. A method of proxying a service in a wireless network according any preceding claim, wherein the second end point device is put in a low power mode when the service that it offers is not being accessed.

10. A method of proxying a service in a wireless network according to any preceding claim, wherein the wireless connections are Bluetooth connections.

11. A method of proxying a service in a wireless network according to claim 10 when dependent on claim 9, wherein the second end point device is put in a Park or Sniff mode when the service that it offers is not being accessed.

12. A method of proxying a service in a wireless network according to any preceding claim, wherein the access point allows access to the service offered by the second end point device in dependence on predetermined criteria.

13. A wireless network adapted to operate in accordance with the method of any one of the preceding claims.
